# DEMANDE DE BREVET EUROPEEN

(11) **EP 0 524 066 A1**
(43) Date de publication de la demande: **20.01.1993**
(21) Numéro de dépôt: 92401986.2
(22) Date de dépôt: 09.07.1992
(51) Int. Cl.: F16H 61/06

(54) **Procédé et dispositif de commande d'une transmission automatique**

(30) Priorité: 16.07.1991 FR 9108941
(71) Demandeur: REGIE NATIONALE DES USINES RENAULT S.A., F-92109 Boulogne Billancourt (FR)
(72) Inventeur: Leorat, François, F-78000 Versailles (FR)

(57) **Abrégé**

Procédé de commande d'une transmission automatique étagée à plusieurs rapports de marche avant à passages montants sous couple assurés par l'alimentation sélective de plusieurs récepteurs, en fluide de pression, à partir d'un distributeur hydraulique, selon le rapport imposé par les informations concernant la marche du véhicule de façon telle que chaque changement de rapport corresponde à la vidange d'un premier récepteur (3) et à la mise sous pression d'un second récepteur (4) et que la vidange du premier récepteur (3) soit déclenchée postérieurement au début de la montée en pression du second récepteur (4) par le basculement d'une vanne de coupure (2), caractérisé en ce que lors des passages montants, le basculement de la vanne de coupure (2) est piloté électroniquement sur la base d'une scrutation du régime Ωe de l'arbre d'entrée de la transmission, à partir du début du passage.

## Description

La présente invention concerne la commande d'une transmission automatique à plusieurs rapports étagés à passage sous couple, présentant de façon classique un convertisseur de couple associé à un train d'engrenages épicycloïdal contrôlé par plusieurs embrayages et freins à commande hydraulique, ainsi qu'un distributeur hydraulique piloté par des électrovannes de façon à alimenter sélectivement les freins et les embrayages selon le rapport imposé par les informations concernant la marche du véhicule.

Une transmission automatique de ce type est notamment illustrée par la publication FR 2.570.458 de la demanderesse. Le dispositif et le procédé de commande faisant l'objet de cette publication se rapportent à une transmission automatique à quatre rapports de marche avant selon laquelle les passages montants s'effectuent sous couple, chaque passage correspondant à la modification d'un récepteur, c'est-à-dire à la vidange d'un premier récepteur (embrayage ou frein) et à la mise sous pression d'un second récepteur (embrayage ou frein).

Le passage des rapports sous couple dans une transmission automatique demande une maîtrise parfaite de ces deux opérations. Pour assurer cette coordination, il est connu d'utiliser une vanne de coupure de l'alimentation en fluide de pression des deux récepteurs concernés, dont le basculement déclenche notamment la vidange du premier récepteur, postérieurement au début de la montée en pression du second.

L'invention vise à améliorer le contrôle du passage des rapports, en proposant un procédé et un dispositif de commande de transmission automatique permettant d'optimiser le basculement de la vanne de coupure.

Elle concerne un procédé de commande d'une transmission automatique étagée à plusieurs rapports de marche avant à passages montants sous couple assurés par l'alimentation sélective de plusieurs récepteurs en fluide de pression à partir d'un distributeur hydraulique, selon le rapport imposé par les informations concernant la marche du véhicule, de façon telle que chaque changement de rapport corresponde à la vidange d'un premier récepteur et à la mise sous pression d'un second récepteur, et que la vidange du premier récepteur soit déclenchée postérieurement au début de la montée en pression du second récepteur par le basculement d'une vanne de coupure. Ce procédé est caractérisé en ce que lors des passages montants, le basculement de la vanne de coupure est piloté électroniquement sur la base d'une scrutation du régime Ωe, de l'arbre d'entrée de la transmission, à partir du début du passage.

Selon un mode de réalisation de l'invention, le basculement de la vanne de coupure est assuré par l'application contre celle-ci d'une pression captée sur le circuit d'alimentation du second récepteur.

Selon un mode de réalisation de l'invention, la scrutation du régime Ωe de l'arbre d'entrée de la transmission est assurée par le calculateur de celle-ci.

Selon un mode de réalisation de l'invention, le basculement de la vanne de coupure est déclenché par le passage du régime Ωe de l'arbre d'entrée de la transmission par un maximum, postérieurement au début du passage.

Selon un mode de réalisation de l'invention, le basculement de la vanne de coupure est piloté directement par une électrovanne de manoeuvre, en réponse au signal de déclenchement transmis par le calculateur.

Selon un mode de réalisation de l'invention, le basculement de la vanne de coupure est piloté par une vanne auxiliaire elle-même sous la commande d'une électrovanne de manoeuvre.

Selon un mode de réalisation de l'invention, le basculement de la vanne de coupure est obtenu en réponse à une séquence de deux signaux transmis par le calculateur à l'électrovanne, le premier signal correspondant au début du remplissage du second récepteur et excitant l'électrovanne de façon à placer la vanne auxiliaire dans une position de fermeture interdisant le basculement de la vanne de coupure, tandis que le second signal, correspondant au passage du régime Ωe de l'arbre d'entrée par un maximum postérieurement au premier signal, excite l'électrovanne de façon à ce qu'elle commande le basculement de la vanne auxiliaire dans une position de passage entraînant le basculement de la vanne de coupure.

L'invention concerne également un dispositif de commande spécialement conçu pour la mise en oeuvre d'un procédé conforme à l'une quelconque des revendications précédentes. Ce procédé est caractérisé en ce que le premier récepteur est alimenté par une conduite simple traversant la vanne de coupure, et en ce que le second récepteur est alimenté par l'intermédiaire d'une conduite double, dont une première voie traverse la vanne de coupure, tandis que la seconde passe à l'extérieur de celle-ci.

Selon un mode de réalisation de l'invention, tant que la vanne de coupure n'a pas basculé, elle assure le maintien en pression du premier récepteur, tandis que le remplissage du second récepteur s'effectue simultanément par sa première et sa seconde voie d'alimentation.

Selon un mode de réalisation de l'invention, le basculement de la vanne de coupure entraîne le déclenchement de la vidange du premier récepteur, trandis que le remplissage du second récepteur se poursuit uniquement par sa voie extérieure.

La présente invention sera mieux comprise à la lecture de la description suivante d'un mode de réalisation particulier de celle-ci, en liaison avec les dessins annexés sur lesquels :
- la figure 1 reproduit le tableau de fonctionnement d'une transmission automatique à quatre rapports de marche avant,
- la figure 2 montre l'évolution dans le temps de la pression régnant dans trois récepteurs d'une transmission automatique au cours d'un passage montant, lorsque la coordination de la commande est parfaite,
- les figures 3 et 4 correspondent à la figure 2 en cas de mauvaise coordination,
- la figure 5 représente un schéma de commande directe de la vanne de coupure par une électrovanne,
- la figure 6 représente un schéma de commande indirecte de la vanne de coupure par une vanne auxiliaire,

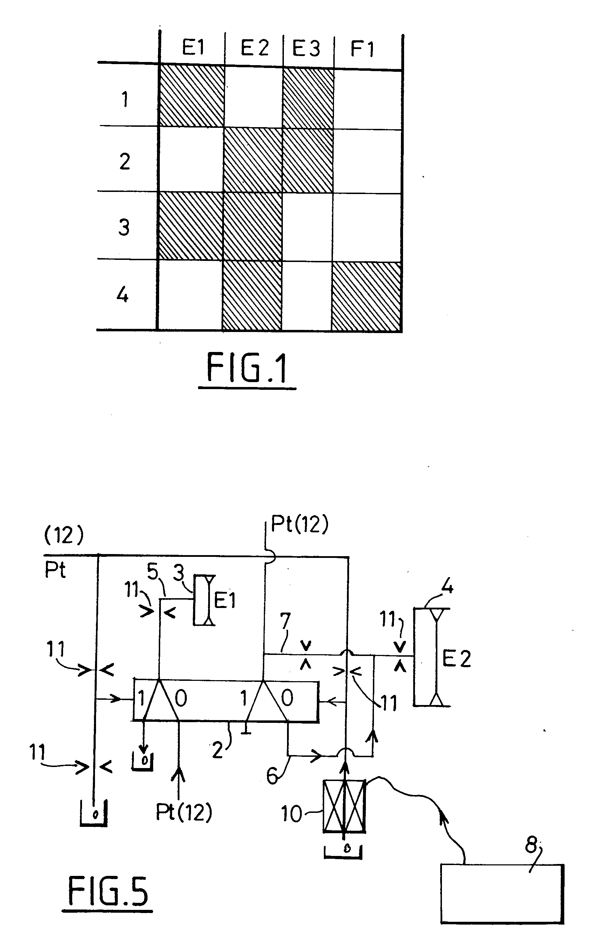

Le tableau de la figure 1 se rapporte à une transmission automatique dans laquelle le passage des quatre rapports de marche avant fait notamment intervenir quatre récepteurs hydrauliques, dont trois embrayages E₁, E₂ et E₃, et un frein F₁.

Ce tableau, donné à titre d'exemple, ne limite en aucun cas la portée de l'invention à une transmission répondant à ce schéma de fonctionnement. Selon ce dernier, le passage du premier au second rapport est obtenu par desserrage du premier embrayage E₁ et serrage du second embrayage E₂, tandis que les passages du second au troisième, et du troisième au quatrième rapport sont assurés respectivement par la combinaison du desserrage du troisième embrayage E₃ et du serrage du premier embrayage E₁, et par la combinaison du desserrage du premier embrayage E₁ et du serrage du frein F₁. Il ressort de ce schéma de fonctionnement, que chaque changement de rapport correspond au desserrage, donc à la vidange, d'un premier récepteur hydraulique, et au serrage, donc au remplissage et à la montée en pression d'un second récepteur. Cette combinaison de deux opérations, traduisant la modification, pour chaque passage, d'un seul des deux récepteurs engagés, constitue toutefois une condition nécessaire à la mise en oeuvre de l'invention.

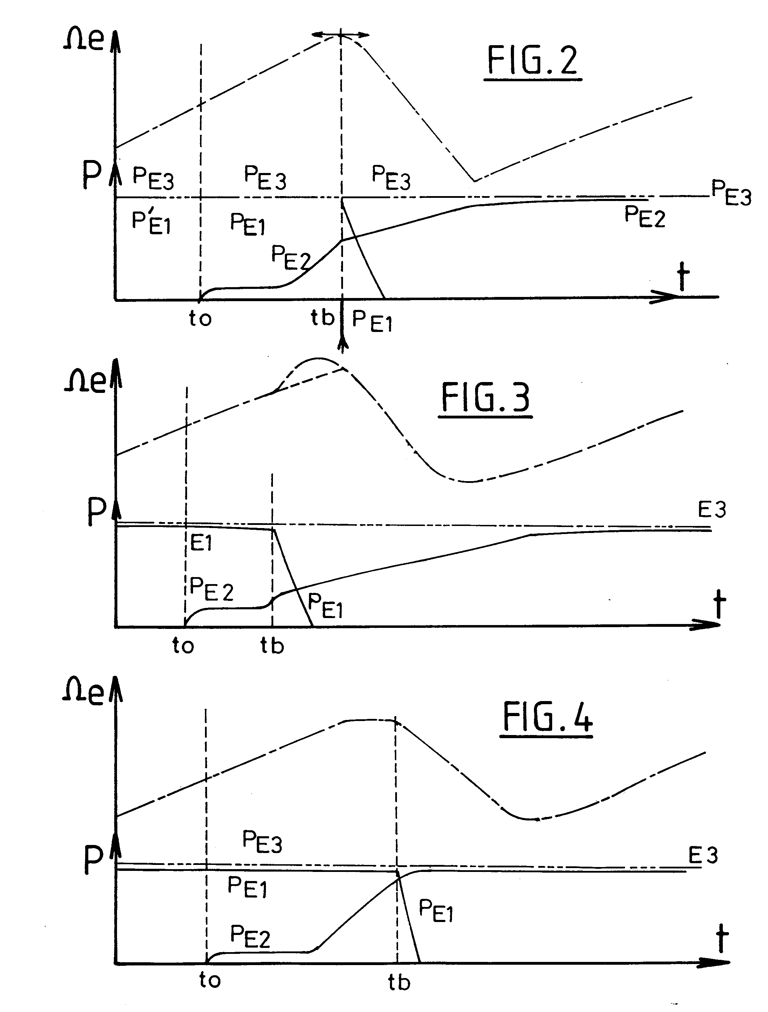

Les graphes faisant l'objet de la figure 2, traduisent une coordination parfaite des opérations de vidange et de remplissage des récepteurs lors d'un passage montant, du premier au second rapport, conformément à la figure 1. Jusqu'au top tₒ du début du passage, les embrayages E₁ et E₃ sont serrés donc maintenus sous une pression PE₁ = PE₃ constante, tandis que la pression PE₂ de l'embrayage E₂ est nulle. A partir de tₒ la pression PE₂ croît, sans que, dans un premier temps, les pressions PE₁ et PE₃ des embrayages E₁ et E₃ n'évoluent. En revanche, à compter de l'instant t_{b} (postérieur à to) du basculement de la vanne de coupure, la pression PE₁ de l'embrayage E₁ diminue jusqu'à zéro. La vidange du récepteur E₁ ne doit en effet être déclenchée que postérieurement à l'envoi de la pression dans E₂. Ces opérations sont parfaitement coordonnées, si la vidange de E₁ débute exactement au moment où aucun couple ne transite plus par ce dernier, c'est-à-dire lorsque la vitesse de l'arbre d'entrée de la transmission commence à diminuer. Cette coordination parfaite est illustrée par la figure 2, où l'on remarquera que le basculement de la vanne de coupure se produit exactement au passage de la vitesse d'entrée Ωe par son maximum.

Selon une technique connue, la vanne de coupure intervenant pour couper l'alimentation d'un récepteur, tel que E₁ dans l'exemple décrit, fonctionne en bloc. Cette vanne est maintenue dans sa position initiale par une pression de tarage Pt, et bascule sous l'effet de la pression PE₂ s'exerçant dans une direction opposée à à Pt, lorsque PE₂ = Pt. Avec un tel pilotage de la vanne de coupure, il semble donc a priori possible d'envisager une optimisation de la commande du passage, consistant à déterminer avec précision la valeur de la pression atteinte dans E₂ qui correspond au passage de la vitesse d'entrée Ωe par son maximum. Toutefois la réalité est autre, et l'expérience montre qu'il subsiste toujours des problèmes de perte de charge, variables notamment avec la dispersion de fabrication et la température de fluide de travail, dûs à la sensibilité du système aux fuites conceptuelles influençant la pression de commande de la vanne de coupure. Dans la pratique, le basculement de celle-ci ne se produit donc jamais exactement au moment souhaité. Les figures 3 et 4 illustrent deux cas de disfonctionnement possibles. La figure 3 se rapporte au cas où le basculement de la vanne de coupure est déclenché trop tôt : il en résulte un emballement temporaire du moteur dû au fait que le couple est insuffisamment transmis. Sur la figure 4, correspondant à un basculement tardif de la vanne de coupure, on observe au contraire la mise en palier de la vitesse du moteur. Ce phénomène, dit de "recouvrement", se traduit par un retard dans l'engagement du rapport supérieur et une sensation de perte d'accélération du véhicule.

Pour échapper aux aléas du pilotage hydraulique de la vanne de coupure, l'invention propose de piloter celle-ci électroniquement. La solution mise en oeuvre consiste à opérer une scrutation électronique du régime Ωe de l'arbre d'entrée de la transmission, à partir du top de début de passage, pour déterminer l'instant où ce régime commence à décroître. On peut aisément déterminer cet instant à l'aide d'un calculateur, relevant l'annulation de la dérivée de la vitesse d'entrée Ωe.

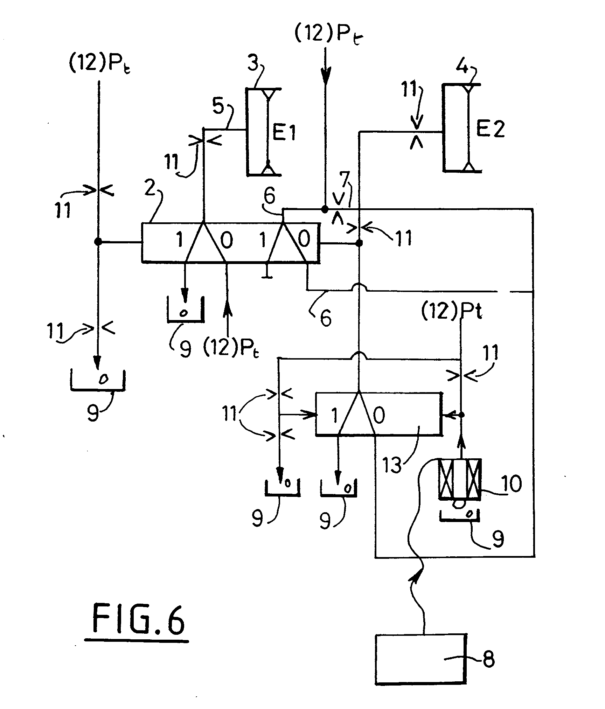

Les figures 5 et 6 représentent deux schémas de commande d'une même vanne de coupure 2 correspondant à deux modes de réalisation distincts de l'invention. L'implantation et le fonctionnement proprement dits de cette vanne de coupure 2, équivalents selon ces deux modes de réalisation, sont les suivants. La vanne de coupure 2 est traversée par la conduite d'alimentation 5 du premier embrayage E₁ (3) à partir d'un distributeur hydraulique 12 non représenté, et par une conduite d'alimentation 6 du second embrayage E₂ (4), à partir du même distributeur 12 délivrant une pression P₁. Toutefois, alors que le premier récepteur E₁ (3) ne possède qu'une seule conduite d'alimentation 5, contrôlée par la vanne de coupure 2, le second récepteur E₂ (4) est alimenté par une conduite double 6, 7, dont une première voie 6 est contrôlée par la vanne de coupure 2, tandis que la seconde 7 est indépendante de celle-ci. Quel que soit son mode de commande, la vanne de coupure 2, connue en soi, utilisée dans le cadre de l'invention, se déplace en bloc, ou "bascule", entre une première position (o) ou position de passage, autorisant simultanément l'écoulement du fluide en direction des deux récepteurs E₁ (3) et E₂ (4), et une seconde position, ou position de coupure (1) interdisant simultanément l'alimentation des deux récepteurs E₁ (3), et E₂ (4). Dans cette seconde position, l'alimentation du premier récepteur E₁ (3) est totalement interrompue, tandis que celle du second récepteur E₂ (4) se poursuit par la conduite extérieure 7.

Pendant la première partie d'un passage de vitesse montant, par exemple un passage du premier au second rapport de marche avant effectué conformément au tableau de commande de la figure 1, la montée en pression du second récepteur E₂ (4) s'effectue sans coupure de l'alimentation du premier récepteur E₁ (3), jusqu'au basculement de la vanne de coupure (2), tandis qu'après son basculement, la montée en pression du second récepteur se poursuit alors que le premier récepteur E (3) est vidangé. Conformément à l'art antérieur connu, le basculement de la vanne de coupure (2) pilotée selon l'invention est assuré par l'application sur celle-ci d'une pression captée sur le circuit d'alimentation 7 du second récepteur E₂ (4).

Sur les figures 5 et 6, on a également fait apparaître un calculateur 8, pouvant par exemple être celui de la transmission elle-même, ainsi qu'une électrovanne 10 et une vanne auxiliaire 13 dont les fonctions respectives vont être explicitées. Enfin, un certain nombre de gicleurs de découplage 11, judicieusement disposés le long des conduites d'alimentation 5, 6, et 7, garantissent le bon écoulement du fluide et la transmission des pressions le long de celles-ci.

Une caractéristique essentielle de l'invention consiste en ce que le basculement de la vanne de coupure 2 n'est plus déterminé, comme selon l'art antérieur, par la valeur de la pression régnant dans le circuit d'alimentation du second récepteur E₂ (4), mais est pris en charge par un système de pilotage électronique reposant sur la scrutation du régime Ωe de l'arbre d'entrée de la transmission.

Selon le schéma de commande de la figure 5, le basculement de la vanne de coupure 2 est piloté directement par une électrovanne de manoeuvre 10, en réponse à un signal unique transmis par le calculateur 8. Dans ce cas, la pression faisant basculer la vanne de coupure 2, captée sur le circuit d'alimentation du second embrayage 6, 7, s'exerce à l'encontre d'une pression de tarage Pₜ, inférieure à celle-ci en valeur absolue. La pression de tarage Pₜ maintient la vanne de coupure dans sa position de passage, lorsqu'elle est seule à s'appliquer vis-à-vis de cette dernière.

En revanche, conformément au schéma de fonctionnement de la figure 6, le basculement de la vanne de coupure 2 est obtenu à la suite d'une séquence de deux signaux, transmis par le calculateur 8 à l'électrovanne 10. Le premier signal est émis lors du début du remplissage du second récepteur, c'est-à-dire au "top" de début de passage tₒ. Ce premier signal excite l'électrovanne 10 de façon à placer la vanne auxiliaire 13 dans une première position (1), de fermeture, interdisant le basculement de la vanne de coupure 2. Le second signal, correspondant au passage du régime Ωe de l'arbre d'entrée par un maximum, postérieurement au premier signal, déplace la vanne auxiliaire 13 dans une position de passage (o) entraînant le basculement de la vanne de coupure 2. Selon ce schéma, la pression faisant basculer la vanne auxiliaire est une presssion de tarage Pₜ indépendante du circuit d'alimentation 6, 7 du second récepteur E₂ (4), tandis que la pression faisant basculer la vanne de coupure 2 est captée, comme dans l'exemple précédent, sur le circuit d'alimentation 6, 7 du second récepteur E₂ (4).

Conformément aux deux schémas de commande qui viennent d'être décrits, si le basculement de coupure 1 est opéré sous l'action de pression d'alimentation du second récepteur 4, il ne s'effectue plus, en réponse à l'atteinte d'un niveau de pression prédéterminé dans celui-ci, mais grâce à la détermination précise du passage du régime d'entrée par son maximum Ωe ₘₐₓ. Le résultat obtenu grâce à l'invention est une coordination parfaite de la commande de l'alimentation des récepteurs 3, 4 lors du passage.

## Revendications

**[1]** Procédé de commande d'une transmission automatique étagée à plusieurs rapports de marche avant à passages montants sous couple assurés par l'alimentation sélective de plusieurs récepteurs, en fluide de pression, à partir d'un distributeur hydraulique, selon le rapport imposé par les informations concernant la marche du véhicule de façon telle que chaque changement de rapport corresponde à la vidange d'un premier récepteur (3) et à la mise sous pression d'un second récepteur (4) et que la vidange du premier récepteur (3) soit déclenchée postérieurement au début de la montée en pression du second récepteur (4) par le basculement d'une vanne de coupure (2), caractérisé en ce que lors des passages montants, le basculement de la vanne de coupure (2) est piloté électroniquement sur la base d'une scrutation du régime Ωe de l'arbre d'entrée de la transmission, à partir du début du passage.

**[2]** Procédé de commande de la revendication 1, caractérisé en ce que le basculement de la vanne de coupure (2) est assuré par l'application contre celle-ci d'une pression captée sur le circuit d'alimentation (6, 7) du second récepteur.

**[3]** Procédé de commande selon la revendication 1 ou 2, caractérisé en ce que la scrutation du régime Ωe de l'arbre d'entrée de la transmission est assurée par le calculateur (8) de celle-ci.

**[4]** Procédé de commande selon la revendication 1, 2 ou 3, caractérisé en ce que le basculement de la vanne de coupure (2) est déclenché par le passage du régime Ωe de l'arbre d'entrée de la transmission par un maximum, postérieurement au début du passage.

**[5]** Procédé de commande selon l'une quelconque des revendications 1 à 4, caractérisé en ce que le basculement de la vanne de coupure (2) est piloté directement par une électrovanne de manoeuvre (10) en réponse au signal de déclenchement transmis par le calculateur (8).

**[6]** Procédé de commande selon l'une quelconque des revendications 1 à 4, caractérisé en ce que le basculement de la vanne de coupure (2) est piloté par une vanne auxiliaire (13) elle-même sous la commande d'une électrovanne de manoeuvre (10).

**[7]** Procédé de commande selon la revendication 6, caractérisé en ce que le basculement de la vanne de coupure (2) est obtenu en réponse à une séquence de deux signaux transmis par le calculateur (8) à l'électrovanne (10), le premier signal correspondant au début du remplissage du second récepteur et excitant l'électrovanne (10) de façon à placer la vanne auxiliaire (13) dans une position de fermeture (1) interdisant le basculement de la vanne de coupure (2) tandis que le second signal, correspondant au passage du régime Ωe de l'arbre d'entrée par un maximum postérieurement au premier signal, excite l'électrovanne (10) de façon à ce qu'elle commande le basculement de la vanne auxiliaire (8) dans une position de passage (6) entraînant le basculement de la vanne de coupure (2).

**[8]** Dispositif de commande spécialement conçu pour la mise en oeuvre d'un procédé conforme à l'une quelconque des revendications précédentes, caractérisé en ce que le premier récepteur (3) est alimenté par une conduite simple (5) traversant la vanne de coupure (2) et en ce que le second récepteur est alimenté par l'intermédiaire d'une conduite double (6, 7), dont une première voie (6) traverse la vanne de coupure (2), tandis que la seconde (7) passe à l'extérieur de celle-ci.

**[9]** Dispositif de commande selon la revendication 8, caractérisé en ce que tant que la vanne de coupure (2) n'a pas basculé, elle assure le maintien en pression du premier récepteur (3), tandis que le remplissage du second récepteur (4) s'effectue simultanément par sa première (6) et sa seconde voie (7) d'alimentation.

**[10]** Dispositif de commande selon les revendications 8 ou 9, caratérisé en ce que le basculement de la vanne de coupure (2) entraîne le déclenchement de la vidange du premier récepteur (3), tandis que le remplissage du second récepteur (4) se poursuit uniquement par sa voie extérieure (7).
